# EUROPÄISCHE PATENTSCHRIFT

(11) **EP 4 574 591 B1**
(45) Veröffentlichungstag und Bekanntmachung des Hinweises auf die Patenterteilung: **18.11.2026**
(21) Anmeldenummer: 24200546.0
(22) Anmeldetag: 16.09.2024
(51) Int. Cl.: B60T 7/12

(54) **VERFAHREN UND VORRICHTUNG ZUM DURCHFÜHREN EINER BREMSUNG IN EINEM EGO-FAHRZEUG**
METHOD AND DEVICE FOR CARRYING OUT BRAKING IN AN EGO VEHICLE
PROCÉDÉ ET DISPOSITIF POUR EFFECTUER UN FREINAGE DANS UN VÉHICULE AUTONOME

(30) Priorität: 18.12.2023 DE 102023212830
(43) Veröffentlichungstag der Anmeldung: 25.06.2025
(73) Patentinhaber: Robert Bosch GmbH, 70442 Stuttgart (DE)
(72) Erfinder: Zimmermann, Jan Christian, 30177 Hannover (DE); Scherl, Michael, 74321 Bietigheim (DE); Llatser Marti, Ignacio, 31135 Hildesheim (DE); Wildschuette, Florian, 31139 Hildesheim (DE)

(56) Entgegenhaltungen:
- DE-A1- 102020 102 965
- US-A1- 2007 046 449
- US-B2- 9 566 959

## Beschreibung

### Stand der Technik

Die vorliegende Erfindung betrifft ein Verfahren zum Durchführen einer Bremsung in einem Ego-Fahrzeug sowie eine entsprechende Vorrichtung.

Es existiert derzeit ein langfristiges Ziel, die Anzahl der Verkehrstoten und Schwerverletzten in Verkehrsunfällen auf Null zu reduzieren. Ein durchschnittlicher menschlicher Fahrer kann Fehler verursachen, die zu kritischen Situationen führen können. Ferner sind die menschlichen Fähigkeiten zum Vermeiden von Unfällen aufgrund physikalischer Beschränkungen begrenzt. Um die Zahl der Toten und Verletzten zu verringern, unterstützen moderne Autos den menschlichen Fahrer durch verschiedene Assistenzfunktionen. Eine der wichtigsten Funktionen zum Vermeiden und/oder Abmildern von Unfällen ist das automatische Bremsen. In kritischster Form wird dies als automatischer Notbremsassistent ("automated emergency brake", AEB) bezeichnet. Diese Funktion aktiviert eine Vollbremsung, wenn ein Unfall droht, den der Fahrer nicht mehr vermeiden kann.

Das Auslösen der AEB beruht auf Daten, die ein Sensorsystem des Fahrzeugs liefert, das in der Regel Kameras, Radar und möglicherweise Lidar umfasst. Diese fahrzeuginternen Sensoren benötigen jedoch eine direkte Sichtverbindung zwischen Sensor und Kollisionsgegner. Diese Einschränkung trifft jedoch auch auf den menschlichen Fahrer zu. Die Sichtverbindung kann beispielsweise durch Wettereinfluss, dichten Verkehr oder andere physikalische Hindernisse, z.B. an verdeckten Kreuzungen oder nicht einsehbaren Kurven, beeinträchtigt werden.

Fahrzeug-Kommunikation ("Vehicle-to-Everything", V2X) ermöglicht es dem Ego-Fahrzeug, Informationen beispielsweise mit anderen Verkehrsteilnehmern, einer Infrastruktur und/oder Netzwerk-Diensten, wie z.B. einer Cloud oder einem Server, auszutauschen. Diese Form der Kommunikation erfordert Sende- und Empfangsfähigkeiten der Fahrzeuge sowie den Aufbau einer sicheren und zuverlässigen drahtlosen Verbindung zwischen den Kommunikationspartnern. Eine Sichtverbindung zwischen den Kommunikationspartnern ist dafür jedoch nicht zwingend erforderlich. Daher kann V2X als zusätzlicher Sensor eingesetzt werden, der die Sensoren an Bord des Ego-Fahrzeugs in Szenarien mit eingeschränkter Sicht ergänzt. Somit kann ein automatisches Bremsen oder ein Durchführen von Kollisionsvermeidungsmaßnahmen ermöglicht werden, auch wenn der Gegner für den Fahrer und die sichtbasierten Sensoren an Bord des Ego-Fahrzeugs nicht sichtbar ist.

Die Patentanmeldung FR 3 123 616 A1 beschreibt ein Verfahren zum Ermitteln eines Kollisionsrisikos zwischen einem Ego-Fahrzeug und einem Gegner-Fahrzeug. Mittels V2V ("Vehicle-to-Vehicle Communication") empfängt das Ego-Fahrzeug Positions- und dynamische Parameter des Gegners und prognostiziert sowohl die eigene Trajektorie als auch die Trajektorie des Gegners. Basierend auf den Vorhersagen wird ein Kollisionsrisiko berechnet. Wenn dieses Risiko einen bestimmten Schwellenwert überschreitet, wird eine automatische Bremsung ausgelöst.

Die Patentanmeldung US 2023/070 314 A1 beschreibt einen ähnlichen Ansatz, bei dem das Ego-Fahrzeug über einen V2V-Kanal Informationen über die Geschwindigkeit und/oder Beschleunigung eines Gegners erhält. Auf der Grundlage dieser Informationen werden Kollisionswahrscheinlichkeiten berechnet und ein geeignetes Reaktionsschema gewählt, um ein unnötig starkes Bremsverhalten zu vermeiden.

Das Verfahren der Patentanmeldung US 2020/257 308A1 nutzt zusätzliche Informationen zum Berechnen der Kollisionswahrscheinlichkeit: Lenkwinkel und Lenkwinkeländerung des gegnerischen Fahrzeugs werden neben Informationen zu dynamischen Parametern über V2V übertragen. Darüber hinaus werden auch relevante Informationen, die von einer Infrastruktur ("Vehicle-to-Infrastructure-Communication", V2I) oder einem entfernten Server ("Vehicle-to-Network-Communication", V2N) gesendet werden, berücksichtigt. Bei Überschreiten eines Grenzwerts des Kollisionsrisikos wird eine Kollisionswarnung und eine Handlungsaufforderung an den Fahrer des Ego-Fahrzeugs ausgegeben.

Ein möglicher Nachteil von V2X-Kommunikation ist, dass empfangene V2X-Daten möglicherweise nicht ausreichend zuverlässig und/oder vertrauenswürdig für eine Nutzung in sicherheitskritische Fahrfunktionen sind. Funktionen wie z.B. AEB müssen jedoch hohe Sicherheitsanforderungen erfüllen, die insbesondere durch einen entsprechenden Automotive Safety Integrity Level (ASIL) laut der Norm ISO 26262 festgelegt werden. Das erforderliche Sicherheitsniveau, das zum Auslösen einer AEB erforderlich ist, kann durch V2X-Kommunikation allein unter Umständen nicht erreicht werden. Allerdings kann in vielen Situationen, in denen die Sichtverbindung zwischen Ego-Fahrzeug und Gegner-Fahrzeug beeinträchtigt ist, das Auslösen der AEB allein auf Grundlage der bordeigenen Sensoren des Ego-Fahrzeugs die Kollision nicht verhindern.

### Offenbarung der Erfindung

Mit der vorliegenden Erfindung lässt sich ein Ego-Fahrzeug sicher abbremsen, um eine Kollision mit einem Gegner-Fahrzeug zu vermeiden, selbst wenn das Gegner-Fahrzeug nicht von Sensoren an Bord des Ego-Fahrzeugs erfasst werden kann.

Erfindungsgemäß werden daher ein Verfahren zum Durchführen einer Bremsung in einem Ego-Fahrzeug nach Patentanspruch 1 sowie eine Vorrichtung zum Durchführen einer Bremsung in einem Ego-Fahrzeug mit den Merkmalen des Patentanspruchs 11 angegeben. Als Bremsung wird hier ein automatisierter Bremsvorgang zum Vermeiden einer Kollision mit einem anderen Verkehrsteilnehmer verstanden, bei dem der Fahrer des Ego-Fahrzeugs den Bremsvorgang nicht selbst einleitet.

Vorteilhafte Ausgestaltungen und Weiterbildungen ergeben sich aus den weiteren Unteransprüchen sowie aus der Beschreibung unter Bezugnahme auf die Figuren.

Die vorliegende Erfindung schlägt vor, ein zweistufiges Bremsschema zu verwenden, so dass Kollisionen auch in Situationen vermieden werden können, in denen ein Sichthindernis das rechtzeitige Erkennen einer potenziellen Kollision durch bordeigene Sensoren nicht zulässt. Die erste Stufe umfasst ein moderates Bremsschema, das nur ein niedriges ASIL-Niveau erfordert, beispielsweise das als QM ("Qualitätsmanagement") bezeichnete Niveau, und daher allein auf Grundlage von V2X-Daten ausgelöst werden kann, wenn keine Sichtverbindung hergestellt werden kann. Bei diesem moderaten Bremsschema wird die Bremskraft begrenzt, z.B. auf eine maximale Verzögerung von 4 m/s².

In einer zweiten Stufe kann eine Notbremsung mit einer höheren Bremskraft (z.B. maximaler Bremskraft) zu einem späteren Zeitpunkt mit Hilfe bordeigener Sensoren ausgelöst werden, wenn eine Sichtverbindung zwischen Ego-Fahrzeug und Gegner-Fahrzeug hergestellt werden kann und die Kollision nicht allein durch die erste Bremsstufe vermieden werden kann. Die zweite Stufe erfordert aufgrund der notwendig höheren Bremskraft ein höheres ASIL-Niveau, z.B. ASIL B, das nach aktuellem Stand der Technik nur durch Verwenden der Daten der bordeigenen Sensoren erfüllt werden kann. Dadurch wird eine maximale Verzögerung von beispielsweise 9 m/s² ermöglicht.

Neben der verbesserten Fähigkeit zum Vermeiden von Unfällen und einem erhöhten Fahrkomfort durch die moderate Bremsung der ersten Stufe gewinnt das zweistufige Bremsschema an Robustheit gegenüber Ungenauigkeiten aller Art, insbesondere Messfehler und Toleranzen beim Berechnen von Position, Geschwindigkeit und Richtung des Ego-Fahrzeugs und/oder des Gegner-Fahrzeugs und dergleichen. Erreicht wird dies durch die unabhängige zweite Bremsstufe, die aufgrund der späteren Auslösung Ungenauigkeiten korrigieren kann, die zum Zeitpunkt des Auslösens der ersten Stufe in Kauf genommen werden können. Wenn die zweite Stufe zu einem späteren Zeitpunkt ausgelöst wird, können die Ungenauigkeiten aufgrund der besseren Datenqualität, der längeren Beobachtungszeit und der kürzeren Vorhersagezeit verringert werden.

Als Ego-Fahrzeug wird vorliegend dasjenige Fahrzeug bezeichnet, aus dessen Perspektive das erfindungsgemäße Verfahren durchgeführt wird, bzw. das die erfindungsgemäße Vorrichtung aufweist. Das Ego-Fahrzeug kann ein von einem Menschen gelenkter PKW, Nutzfahrzeug, Motorrad oder ein autonom fahrendes Fahrzeug sein.

Das Gegner-Fahrzeug bezeichnet dasjenige Fahrzeug oder allgemein Verkehrsteilnehmer, mit dem das Ego-Fahrzeug eine Kollision zu einer gewissen Wahrscheinlichkeit berechnet hat. Im einfachsten Fall gibt es nur einen möglichen Kollisionsgegner. Es kann jedoch auch zwei oder mehr wahrscheinliche Kollisionsgegner geben, was den Rechenaufwand erhöhen kann. Der für die vorliegende Betrachtung relevante Kollisionsgegner ist derjenige mit der höchsten Kollisionswahrscheinlichkeit. Dieser wird dann als Gegner-Fahrzeug betrachtet. Das Gegner-Fahrzeug kann ein beliebiges Fahrzeug bzw. allgemein Verkehrsteilnehmer sein, über das bzw. über den Informationen verfügbar sind und eine entsprechend hohe Kollisionswahrscheinlichkeit berechnet wurde. Entsprechend können z.B. auch ein Fußgänger oder Fahrradfahrer als "Gegner-Fahrzeug" betrachtet werden.

Beispielsweise können Daten von einem Mobiltelefon oder einer Smart-Watch eines Fußgängers oder Fahrradfahrers mittels V2X-Kommunikation an das Ego-Fahrzeug übertragen werden. Zukünftig können zusätzlich Zweiradfahrzeuge mit eigener Stromquelle (z.B. Pedelecs oder E-Bikes) mit eigenen V2X-Kommunikationseinheiten ausgestattet sein. Darüber hinaus kann es möglich sein, mittels V2V oder V2I Sensordaten über einen Verkehrsteilnehmer ohne eigene V2X-Kommunikationseinheit an das Ego-Fahrzeug zu übertragen. Beispielsweise können Sensoren eines Drittfahrzeugs oder einer Straßeninfrastruktur Daten über einen Fußgänger, Fahrradfahrer oder Fahrzeug ohne V2X-Austattung erfassen und diese Daten mittels V2V beziehungsweise V2I an das Ego-Fahrzeug übertragen.

In einem Schritt des Verfahrens werden erste Daten von einem Sensor oder mehreren Sensoren an Bord des Ego-Fahrzeugs, die eine Umgebung des Ego-Fahrzeugs detektieren, erfasst. Ein Sensor kann beispielsweise eine Kamera, ein Radar, ein Lidar, einen Ultraschallsensor oder dergleichen umfassen. Die ersten Daten betreffen die Umgebung des Ego-Fahrzeugs. Anhand der ersten Daten können andere Verkehrsteilnehmer, Verkehrszeichen, Straßenbegrenzungen, Straßenmarkierungen, Gebäude am Straßenrand, Hindernisse und dergleichen detektiert werden.

In einem Schritt des Verfahrens werden zweite Daten mittels Fahrzeug-Kommunikation, V2X ("Vehicle-to-Everything"), über ein Gegner-Fahrzeug erfasst. Die zweiten Daten umfassen eine Position, eine Richtung und eine Geschwindigkeit des Gegner-Fahrzeugs. Diese Informationen können alternativ als zwei- oder dreidimensionale geplante Trajektorie beschrieben werden, die den zukünftigen Positionsverlauf des Gegner-Fahrzeugs über die Zeit beschreibt. Die geplante Trajektorie kann beispielsweise als Punkteliste oder mit stückweise Polynomfunktionen (Spline-Funktionen) beschrieben werden. Dadurch, dass die zweiten Daten erfasst werden, ist keine direkte Sichtverbindung der Sensoren an Bord des Ego-Fahrzeugs zum Gegner-Fahrzeug notwendig, um Informationen über das Gegner-Fahrzeug zu erhalten. Folglich kann die Sicherheit der Verkehrsteilnehmer erhöht werden. Dies kann insbesondere an schlecht einsehbaren Kreuzungen im städtischen Verkehr nützlich sein, wo z.B. Gebäude, Bäume, andere Fahrzeuge und dergleichen die Sicht versperren können.

In einem Schritt des Verfahrens werden dritte Daten, die eine Position, eine Richtung und eine Geschwindigkeit des Ego-Fahrzeugs umfassen, erfasst. Diese dritten Daten können z.B. mittels CAN-Bus von Steuergeräten des Fahrzeugs ausgelesen werden. Position, Geschwindigkeit und Richtung des Ego-Fahrzeugs können z.B. auch über einen GNSS-Sensor oder dergleichen ermittelt werden. Ferner können Informationen über einen Lenkwinkel, eine Stellung des Gaspedals, eine Bremskraft, eine Drehgeschwindigkeit der Räder usw. ermittelt werden. Anhand der dritten Daten kann beispielsweise eine zwei- oder dreidimensionale Trajektorie erzeugt werden, der einen Anfangspunkt als Position und weitere Punkte, die basierend auf der aktuellen Geschwindigkeit und Richtung des Ego-Fahrzeugs prädiziert werden, umfasst.

Ermitteln einer Kollisionswahrscheinlichkeit zwischen dem Ego-Fahrzeug und dem Gegner-Fahrzeug in Abhängigkeit der ersten Daten, zweiten Daten und dritten Daten. Das Berechnen der Kollisionswahrscheinlichkeit kann beispielsweise durch Prozessoren an Bord des Ego-Fahrzeugs oder auf einem Edge-Server durchgeführt werden. Hierbei können beispielsweise auch künstliche Intelligenz bzw. Algorithmen, die maschinelles Lernen verwenden, angewendet werden, um die Genauigkeit zu erhöhen und/oder die Rechenzeit zu verkürzen.

Gemäß dem Verfahren wird in einer ersten Stufe eine erste Bremsung mit einer ersten Bremskraft durchgeführt, wenn ein erster Satz von Bedingungen erfüllt ist. In einer zweiten Stufe wird eine zweite Bremsung mit einer zweiten Bremskraft durchgeführt, wenn ein zweiter Satz von Bedingungen erfüllt ist. Hierbei ist die zweite Bremskraft größer als die erste Bremskraft. Somit wird ein zweistufiges Bremsschema realisiert, bei dem zunächst eine moderate Bremsung (erste Stufe) durchgeführt wird, nach der gegebenenfalls eine Notbremsung (zweite Stufe) durchgeführt werden kann, um eine Kollision mit dem Gegner-Fahrzeug zu vermeiden.

Der erste Satz von Bedingungen umfasst, dass die ersten Daten keine Informationen über das Gegner-Fahrzeug umfassen. Mit anderen Worten, die bordeigenen Sensoren können keine Daten über das Gegner-Fahrzeug erfassen, da z.B. eine direkte Sichtverbindung durch ein Hindernis blockiert ist. Entsprechend ist es notwendig, dass die über V2X erfassten zweiten Daten Informationen über das Gegner-Fahrzeug umfassen, so dass eine Kollisionswahrscheinlichkeit ermittelt werden kann. Eine weitere Bedingung für das Durchführen der ersten Bremsstufe ist, dass die berechnete Kollisionswahrscheinlichkeit gleich groß wie oder größer als ein erster Grenzwert ist.

Der Grenzwert für die Kollisionswahrscheinlichkeit kann abhängig von mehreren Faktoren ausgewählt werden, beispielsweise eine Fahrerpräferenz. So kann der Grenzwert (dies gilt sowohl für den ersten als auch zweiten Grenzwert) z.B. bei einer defensiven Fahrweise niedriger ausgewählt werden, was eine falsch-positive Funktionsauslösungen erhöh und falsch-negative reduzieren kann. Bei einer aggressiven Fahrweise kann dies entsprechend umgekehrt sein. Ferner können vorhergesagte Geschwindigkeiten des Ego-Fahrzeugs und des Gegner-Fahrzeugs (die Grenzwerte können bei höheren Geschwindigkeiten niedriger ausgewählt werden, da die potentielle Unfallschwere höher ist, und umgekehrt) und die Fahrzeugtypen des Ego-Fahrzeugs und Gegner-Fahrzeugs (der Grenzwert wird bei schwachen Verkehrsteilnehmern, "Vulnerable Road Users", niedriger ausgewählt, da die potentielle Unfallschwere höher ist) beim Bestimmen der Grenzwerte berücksichtigt werden.

Die berechnete Kollisionswahrscheinlichkeit betrifft hier vorzugsweise den Fall, dass keine Bremsung durchgeführt wird. Mit anderen Worten, es wird in Abhängigkeit der erfassten ersten, zweiten und/oder dritten Daten berechnet, ob eine Kollision wahrscheinlich ist, wenn das Ego-Fahrzeug ohne Bremsung weiterfährt.

Der zweite Satz von Bedingungen umfasst, dass die ersten Daten eine Position, eine Richtung und eine Geschwindigkeit des Gegner-Fahrzeugs umfassen. Mit anderen Worten, die zweite Bremsung wird nur dann eingeleitet, wenn die bordeigenen Sensoren des Ego-Fahrzeugs Informationen über das Gegner-Fahrzeug erfassen. Eine weitere Bedingung ist, dass die nun auch anhand der vorliegenden ersten Daten berechnete Kollisionswahrscheinlichkeit gleich groß wie oder größer als ein zweiter Grenzwert ist.

Eine bevorzugte Ausführung des Verfahrens umfasst einen Schritt zum Erzeugen eines Umgebungsmodells des Ego-Fahrzeugs, das eine Position, Richtung und Geschwindigkeit des Ego-Fahrzeugs und des Gegner-Fahrzeugs sowie deren jeweiligen Unsicherheiten beschreibt. Hierbei können insbesondere Trajektorien für das Ego-Fahrzeug und das Gegner-Fahrzeug in einem Fahrzeug- oder Welt-Koordinatensystem erzeugt werden. Ferner können räumliche Existenzwahrscheinlichkeiten für Ego-Fahrzeug und Gegner-Fahrzeug berechnet werden. Die Kollisionswahrscheinlichkeit kann anschließend in Abhängigkeit des Umgebungsmodells bestimmt werden. Beispielsweise kann berechnet werden, ob sich die jeweiligen Trajektorien schneiden, oder die Räume, beschrieben durch die Existenzwahrscheinlichkeit der Fahrzeuge, überlappen.

Gemäß einer bevorzugten Ausführung kann das Umgebungsmodel ferner Informationen über eine Fahrspur des Ego-Fahrzeugs und/oder des Gegner-Fahrzeugs und/oder Karteninformationen, die eine Topographie einer Umgebung des Ego-Fahrzeugs und/oder des Gegner-Fahrzeugs beschreiben und/oder Informationen über ein Vorfahrtsrecht des Ego-Fahrzeugs und/oder des Gegner-Fahrzeugs umfassen. Anhand dieser Daten kann die Kollisionswahrscheinlichkeit genauer berechnet werden.

Gemäß einer bevorzugten Ausführung können die ersten Daten ferner eine Beschleunigung des Gegner-Fahrzeugs und/oder eine Gierrate des Gegner-Fahrzeugs und/oder ein Fahrzeugtyp des Gegner-Fahrzeugs und/oder Abmessungen des Gegner-Fahrzeugs und/oder eine vergangene Trajektorie des Gegner-Fahrzeugs, und/oder eine geplante Trajektorie des Gegner-Fahrzeugs umfassen. Mit Hilfe dieser zusätzlichen Daten kann die Genauigkeit der Kollisionswahrscheinlichkeit erhöht werden. So lassen sich die Gefahr einer Kollision sowie deren Ort und ein Zeitpunkt der Kollision genauer bestimmen, so dass ein falsch-positives Erkennen einer Kollisionsgefahr vermieden und die Sicherheit der Verkehrsteilnehmer verbessert werden können.

Gemäß einer bevorzugten Ausführung können die zweiten Daten ferner eine Beschleunigung des Gegner-Fahrzeugs und/oder eine Bremskraft des Gegner-Fahrzeugs und/oder einen Lenkwinkel des Gegner-Fahrzeugs und/oder eine Gierrate des Gegner-Fahrzeugs und/oder ein Fahrzeugtyp des Gegner-Fahrzeugs und/oder Abmessungen des Gegner-Fahrzeugs und/oder eine vergangene Trajektorie des Gegner-Fahrzeugs und/oder, insbesondere im Fall eines selbstfahrenden Fahrzeugs, eine geplante Trajektorie des Gegner-Fahrzeugs umfassen. Mit Hilfe dieser zusätzlichen Daten kann die Genauigkeit der Kollisionswahrscheinlichkeit erhöht werden. So lassen sich die Gefahr einer Kollision sowie deren Ort und ein Zeitpunkt der Kollision genauer bestimmen, so dass ein falsch-positives Erkennen einer Kollisionsgefahr vermieden und die Sicherheit der Verkehrsteilnehmer verbessert werden können.

Gemäß einer bevorzugten Ausführung können dritten Daten ferner eine Beschleunigung des Ego-Fahrzeugs und/oder eine Bremskraft des Ego-Fahrzeugs und/oder einen Lenkwinkel des Ego-Fahrzeugs und/oder eine Gierrate des Ego-Fahrzeugs und/oder ein Fahrzeugtyp des Ego-Fahrzeugs und/oder Abmessungen des Ego-Fahrzeugs und/oder eine vergangene Trajektorie des Ego-Fahrzeugs und/oder, insbesondere im Fall eines selbstfahrenden Fahrzeugs, eine geplante Trajektorie des Ego-Fahrzeugs umfassen. So lassen sich die Gefahr einer Kollision sowie deren Ort und ein Zeitpunkt der Kollision genauer bestimmen, so dass ein falsch-positives Erkennen einer Kollisionsgefahr vermieden und die Sicherheit der Verkehrsteilnehmer verbessert werden können.

Vorzugsweise bewirkt die erste Bremskraft eine Verzögerung des Ego-Fahrzeugs von höchstens 4 ms⁻². Dieser Wert entspricht einer üblichen Verzögerung im innerstädtischen Verkehr, die auch von anderen Verkehrsteilnehmern erwartet wird. Somit können insbesondere Auffahrunfälle mit einem weiteren Fahrzeug hinter dem Ego-Fahrzeug vermieden werden. Besonders vorzugsweise kann die erste Bremskraft eine Verzögerung des Ego-Fahrzeugs von ungefähr 3 bis 4 ms⁻² bewirken.

Die zweite Bremskraft bewirkt vorzugsweise eine maximale Verzögerung des Ego-Fahrzeugs, von beispielsweise ungefähr 9 ms⁻². Die maximale Verzögerung wird vorzugsweise in einem möglichst späten Zeitpunkt ausgelöst, um unnötige Bremsmanöver und eine Gefährdung anderer Verkehrsteilnehmer zu vermeiden. Durch Verwenden der maximalen Bremskraft kann der Bremsweg bzw. Anhalteweg verkürzt werden und eine Kollision kann so spät wie möglich verhindert werden.

Gemäß einer bevorzugten Ausführung wird die erste Bremsung zu einem Zeitpunkt eingeleitet, zu dem ein berechneter Zeitraum bis zur Kollision einen Maximalwert unterschreitet. Mit anderen Worten, die erste Bremsung soll zu einem spätest möglichen Zeitpunkt eingeleitet werden, um eine möglichst hohe Genauigkeit beim Berechnen der Kollisionswahrscheinlichkeit zu erreichen, so dass falsch-positive erste Bremsungen vermieden werden können.

Der erste Satz von Bedingungen kann gemäß einer bevorzugten Ausführung ferner umfassen, dass ein Hindernis erkannt wird, das ein Erfassen des Gegner-Fahrzeugs mittels der ersten Daten verhindert. Mit anderen Worten, es wird z.B. mittels der bordeigenen Sensoren und/oder anhand von Daten über die Umgebung des Ego-Fahrzeugs (z.B. Kartendaten) festgestellt, dass ein Sichtkontakt mit einem Gegner-Fahrzeug blockiert ist, so dass die bordeigenen Sensoren keine Daten über das Gegner-Fahrzeug erfassen können. Die Existenz des Gegner-Fahrzeugs ist über das Empfangen der zweiten Daten bekannt. Anhand des aktiven Bestimmens, dass ein Hindernis vorliegt, kann z.B. eine Fehlfunktion der bordeigenen Sensoren ausgeschlossen werden. Somit kann die Sicherheit weiter erhöht werden.

Gemäß einer bevorzugten Ausführung umfasst das Verfahren einen Schritt zum Erfassen von Informationen über ein Vorfahrtsrecht des Ego-Fahrzeugs und des Gegner-Fahrzeugs. Dies kann beispielsweise anhand von Kartendaten und/oder durch Erkennen von Verkehrsschildern und dergleichen erfolgen. Der erste Satz von Bedingungen kann entsprechend ferner umfassen, dass das Ego-Fahrzeug ein Vorfahrtsrecht des Gegner-Fahrzeugs achten muss. Die erste Bremsung kann z.B. dann ausgeführt werden, wenn das Verfahren erkennt, dass der Fahrer des Ego-Fahrzeugs die Vorfahrt des Gegner-Fahrzeugs nicht beachtet. So kann situationsabhängig eine hohe Kollisionswahrscheinlichkeit erkannt und die Kollision verhindert werden.

Eine Vorrichtung zum Durchführen einer Bremsung in einem Ego-Fahrzeug umfasst beispielsweise eine oder mehrere Steuer- und/oder Regeleinrichtungen, die mit Sensoren und Kommunikationseinrichtungen sowie dem CAN-Bus des Ego-Fahrzeugs kommunizieren, um erste, zweite und dritte Daten zu erfassen. Die Vorrichtung ist konfiguriert, ein erfindungsgemäßes Verfahren durchzuführen. Hierzu kann die Vorrichtung beispielsweise auch mit einem ESP- und/oder ABS-System zusammenwirken, um die erste und/oder zweite Bremsung durchzuführen. In Weiterbildungen der vorliegenden Erfindung kann vorzugsweise auch eine Lenkung zum Ausweichen und Vermeiden einer Kollision durchgeführt werden.

Die vorliegende Erfindung wird nachfolgend anhand der in den schematischen Figuren angegebenen Ausführungsbeispiele näher erläutert. Es zeigen dabei:
- Fig. 1: eine schematische Draufsicht auf eine Kreuzung, bei der ein Gebäude die Sicht blockiert;
- Fig. 2: eine schematische Ansicht eines Ausführungsbeispiels einer Vorrichtung zum Durchführen einer Bremsung;
- Fig. 3: einen zeitlichen Ablauf eines Verfahrens zum Durchführen einer Bremsung gemäß einem Ausführungsbeispiel;

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

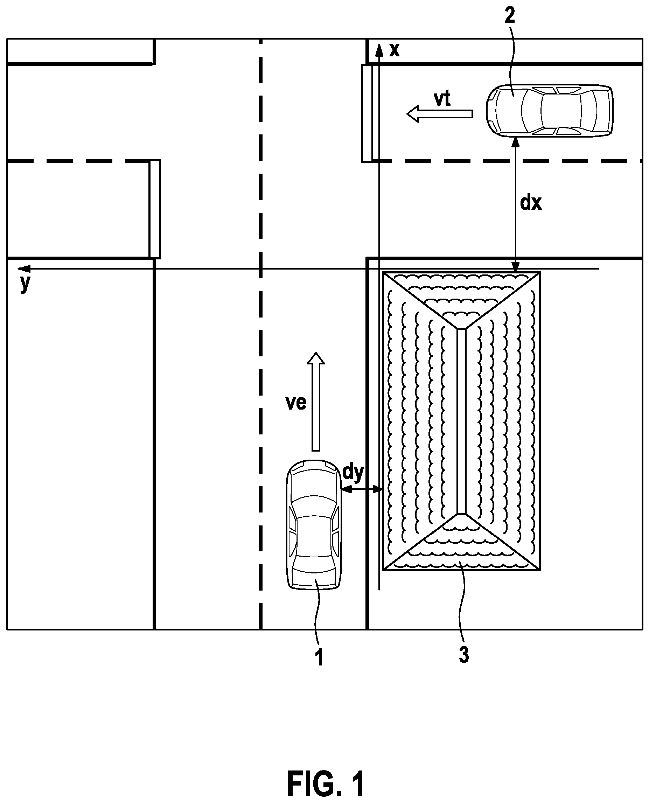

Fig. 1 zeigt eine schematische Draufsicht auf eine Kreuzung, bei der ein Gebäude die Sicht blockiert. Mit x und y sind orthogonale Achsen eines (raumfesten) Koordinatensystems bezeichnet.

In Fig. 1 nähert sich ein von unten kommendes Ego-Fahrzeug 1 mit Geschwindigkeit ve der Kreuzung. Von rechts nähert sich ein Gegner-Fahrzeug 2 mit Geschwindigkeit vt der Kreuzung. Ein Gebäude 3 am rechten Straßenrand neben der Fahrspur des Ego-Fahrzeugs 1 versperrt die Sichtachse zwischen Ego-Fahrzeug 1 und Gegner-Fahrzeug 2. Folglich können weder der Fahrer des Ego-Fahrzeugs 1 noch Sensoren an Bord des Ego-Fahrzeugs 1 das Gegner-Fahrzeug 2 detektieren. Würden beide Fahrzeuge 1, 2 weiter geradeaus fahren, käme es zu einer Kollision. Ein üblicher sichtbasierter Bremsassistent würde versagen und könnte die Kollision nicht verhindern.

Die in Fig. 1 gezeigte Situation kommt häufig im städtischen Verkehr vor. Die Erfindung ist jedoch nicht auf diese Situation beschränkt. Sie ist auch in anderen Situationen dieser Art wirksam, wie z.B. in Kreisverkehren, Kreuzungen in Kurven, Nebenstraßen mit parkenden Fahrzeugen, Radwegkreuzungen, Bahnübergängen, Straßenbahnübergängen, bei dichtem Verkehr um das Ego-Fahrzeug, bei entgegenkommendem Fahrzeug auf der Spur des Ego-Fahrzeugs, bei einem langsamen Fahrzeug vor dem Ego-Fahrzeug in einer Kurve usw.

Bei der in Fig. 1 gezeigten Situation würde ein herkömmlicher sichtbasierter Bremsassistent zu spät reagieren und die Kollision nur abmildern aber nicht verhindern können. Die vorliegende Erfindung umfasst eine erste Bremsung mit moderater Bremskraft, die früh genug durch das Empfangen von V2X-Daten ausgelöst wird, bevor das Gegner-Fahrzeug 2 sichtbar ist, so dass die Kollision vermieden werden kann. Aufgrund der hohen Sicherheitsanforderungen einer Notbremsfunktion lösen die V2X-Daten nur eine moderate Bremsung aus, da eine Notbremsung aufgrund der starken Verzögerung von beispielsweise 9 ms⁻² ein höheres Sicherheitsniveau (z.B. ASIL B) erfordert.

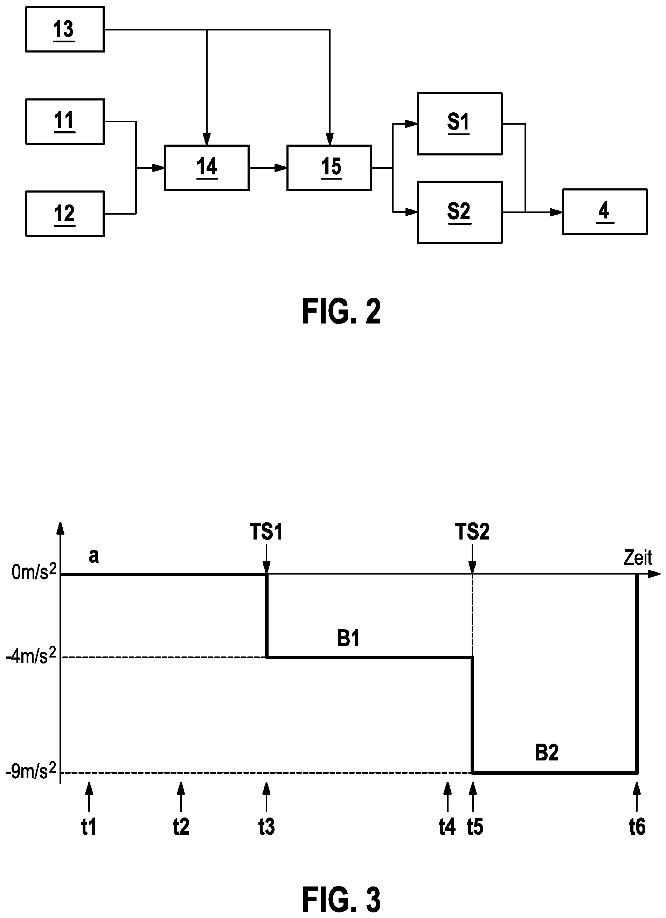

Fig. 2 zeigt eine schematische Ansicht eines Ausführungsbeispiels einer Vorrichtung bzw. eines Verfahrens zum Durchführen einer Notbremsung. Die ersten drei Kästen links bezeichnen die ersten Daten 11, die zweiten Daten 12 und die dritten Daten 13. Diese Daten 11, 12, 13 werden zu einem Umgebungsmodell 14 des Ego-Fahrzeugs kombiniert. Anhand des Umgebungsmodells 14 und der dritten Daten 13 werden Kollisionswahrscheinlichkeiten 15 berechnet. Anschließend findet eine Entscheidung statt, ob eine erste Bremsstufe S1 und/oder eine zweite Bremsstufe S2 durchgeführt werden soll. Anhand der Entscheidung werden Bremssignale erzeugt und an ein Bremssystem 4 des Ego-Fahrzeugs ausgegeben.

Die ersten Daten 11 werden von Sensoren an Bord des Ego-Fahrzeugs 1 erfasst. Sichtbasierte Sensoren an Bord sind erforderlich, um das Gegner-Fahrzeug 2 mit einem hohen funktionalen Sicherheitsniveau zu erkennen und dienen als Datenquelle für das Auslösen der zweiten Bremsung, als der Notbremsung mit maximaler Bremskraft. Sie können aus einem einzigen Sensor, einer Kombination ähnlicher Sensoren oder einer Kombination verschiedener Sensortechnologien (wie z.B. Radar, Video, Lidar oder Ultraschall) bestehen, um die Anforderungen an das funktionale Sicherheitsniveau und die Sensorreichweite zu erfüllen.

Die zweiten Daten 12 werden mittels V2X erfasst und betreffen das Gegner-Fahrzeug 2. Die zweiten Daten 12 umfassen mindestens eine Position, eine Richtung und eine Geschwindigkeit des Gegner-Fahrzeugs 2. Zum Empfangen der zweiten Daten 12 umfasst das Ego-Fahrzeug 1 eine geeignete V2X-Schnittstelle.

Optional können weitere Zustandsinformationen, die eine Vorhersage der Bewegung des Gegner-Fahrzeugs 2 verbessern können, in den zweiten Daten 12 enthalten sein. Beispielsweise umfassen die zweiten Daten 12 eine Beschleunigung, einen Bremsdruck, eine Gierrate, ein Fahrzeugtyp, Abmessungen, eine vergangene Trajektorie und/oder eine geplante Trajektorie, z.B. im Fall eines selbstfahrenden Gegner-Fahrzeugs.

Der Absender der V2X-Kommunikation kann das Gegner-Fahrzeug 2 selbst sein (V2V), eine Infrastruktur (V2I), die mit Sensoren zum Erkennen des Gegner-Fahrzeugs und einer V2X-Kommunikationseinheit ausgestattet ist, oder ein dritter Verkehrsteilnehmer, der das gegnerische Fahrzeug erkennen und die Informationen über das gegnerische Fahrzeug über V2X weitergeben kann.

Die dritten Daten 13 beschreiben den Zustand des Ego-Fahrzeugs 1, insbesondere Position, Geschwindigkeit und Richtung. Optional können weitere Zustandsinformationen des Ego-Fahrzeugs 1, die die Bewegungsvorhersage des Ego-Fahrzeugs 1 verbessern, wie z. B. eine Beschleunigung, einen Bremsdruck, eine Gierrate, ein Fahrzeugtyp, Abmessungen, eine vergangene Trajektorie und/oder eine geplante Trajektorie im Falle eines automatisch fahrenden Ego-Fahrzeugs 1 erfasst werden.

In einer Recheneinrichtung des Ego-Fahrzeugs können die ersten Daten 11, die zweiten Daten 12 und die dritten Daten 13 zusammengeführt werden, um ein Umgebungsmodell 14 des Ego-Fahrzeugs zu erzeugen. Anhand des Umgebungsmodells 14 können Kollisionswahrscheinlichkeiten 15 berechnet werden. Das Umgebungsmodell 14 kombiniert in einer einheitlichen Darstellung (z.B. in einem Welt- oder Fahrzeug-Koordinatensystem) alle Informationen über Zustände und Trajektorien und Unsicherheiten bzw. Ortswahrscheinlichkeiten über das Ego-Fahrzeug und aller potenzieller Gegner-Fahrzeuge. Ferner kann das Umgebungsmodell 14 zusätzliche Informationen über die Verkehrssituation und Verkehrsregeln umfassen.

Kollisionswahrscheinlichkeiten 15 zwischen dem Ego-Fahrzeug und jedem potenziellen Gegner-Fahrzeug können beispielsweise von einer speziell dazu konfigurierten Einrichtung berechnet werden, die einen Prozessor und eine Speichereinrichtung sowie geeignete Schnittstellen zum Eingeben und Ausgeben von Daten umfasst. Dazu ist eine Bewegungsvorhersage für das Ego-Fahrzeug und jeden potenziellen Gegner notwendig. Sie berücksichtigt alle Objektdaten einschließlich der Existenzwahrscheinlichkeiten und Unsicherheiten aus dem Umgebungsmodell 14 und den Datenkomponenten des Ego-Fahrzeugs.

Eine Einrichtung zum Durchführen der Bremsung trifft die Entscheidung, ob das Ego-Fahrzeug die erste Bremsung S1 anwendet. Wie oben beschrieben ist dieses Reaktionsmuster ein moderater Bremseingriff, der nur ein relativ geringes ASIL-Niveau erfordert, das durch V2X-Kommunikation erfüllt werden kann, so dass diese erste Bremsstufe S1 mit Informationen aktiviert werden kann, die ausschließlich aus der V2X-Kommunikation stammen (zweite Daten 12). Wenn z.B. ein ASIL-Niveau "QM" erreicht wird, kann der erste Bremseingriff S1 auf einen maximalen Verzögerungswert von etwa 4 m/s² beschränkt sein. Eine solche Verzögerung tritt im städtischen Verkehr häufig auf und gefährdet andere Verkehrsteilnehmer nicht. Die erste Bremsung S1 kann mit einem konstanten Verzögerungswert oder mit einem an die Notwendigkeit der Kollisionsvermeidung angepassten Verzögerungswert durchgeführt werden. Vorzugsweise wird ein hoher Verzögerungswert nah bei der QM-Grenze verwendet, da dies die Vorhersagezeit und damit falsch-positive Auslöser von Bremsungen reduziert.

Ein erster Satz Auslösebedingungen für die erste Bremsung S1 umfasst die folgenden Kriterien, die vorzugsweise alle erfüllt sein müssen. Eine erste Bedingung ist, dass ohne Bremsung eine Kollision zwischen dem Ego-Fahrzeug und dem Gegner-Fahrzeug mit einer bestimmten Wahrscheinlichkeit vorhergesagt wird. Ferner müssen über V2X-Kommunikation empfangene zweite Daten 12 über Position und Zustand des Gegner-Fahrzeugs vorliegen. Eine dritte Bedingung für das Auslösen ist, dass ein letztmöglicher Zeitpunkt, zu dem die erste Bremsung S1 die Kollision vermeiden kann, erreicht wurde. Mit anderen Worten, die erste Bremsung S1 wird so spät wie möglich eingeleitet, um eine möglichst hohe Vorhersagegenauigkeit zu erreichen und falsch-positive Bremsungen zu vermeiden.

Der spätest mögliche Zeitpunkt kann durch Berechnen eines Anhaltewegs unter der Annahme erreicht werden, dass die erste Bremsung S1 zum aktuellen Zeitpunkt eingeleitet wird. Die Bedingung ist erfüllt, wenn der aktuell verbleibende Abstand zur berechneten Kollisionsposition den Anhaltewegs unterschreitet. Mit dieser Strategie soll das Ego-Fahrzeug immer vor der berechneten Kollisionsposition des Gegner-Fahrzeugs zum Stehen kommen. Alternativ kann der letztmögliche Zeitpunkt so bestimmt werden, dass das Ego-Fahrzeug den Raum hinter dem Gegner-Fahrzeug nutzen kann, nachdem dieser den Weg des Ego-Fahrzeugs passiert hat.

Darüber hinaus wird der Auslösezeitpunkt vorzugsweise durch einen Maximalwert für die verbleibende Zeit zur Kollision beschränkt, um die Vorhersagezeit auf eine Obergrenze zu begrenzen und so die falsch-positive Bremsungen zu reduzieren. Ein beispielhafter Wert für diese maximal zulässige Zeit bis zur Kollision beträgt 2 bis 2,5 Sekunden für innerstädtische Geschwindigkeiten.

Die Einrichtung zum Durchführen der Bremsung trifft die Entscheidung, ob das Fahrzeug die zweite Bremsung S2 durchführen soll. Bei diesem Reaktionsmuster handelt es sich um eine Notbremsung, die ein hohes ASIL-Niveau (z.B. ASIL B) erfordert, das durch über V2X-Kommunikation empfangenen Daten allein üblicherweise nicht erfüllt werden kann. Daher wird die zweite Bremsung S2 erst dann ausgelöst, wenn eine Sichtverbindung zum Gegner-Fahrzeug besteht und dieses von den bordeigenen Sensoren erkannt werden kann, also wenn erste Daten 11 vorliegen. Der Verzögerungswert bei der zweiten Bremsung S2 liegt vorzugsweise nahe an einer Vollbremsung. Ein typischer Wert beträgt z.B. 9 m/s².

Ein zweiter Satz von Auslösebedingungen für die zweite Bremsung S2 umfasst die folgenden Kriterien, die vorzugsweise alle erfüllt sein müssen. Gemäß einer ersten Bedingung muss für den Fall, dass keine Bremsung oder nur die erste Bremsung S1 durchgeführt werden, eine Kollision zwischen dem Ego-Fahrzeug und dem Gegner-Fahrzeug mit einer bestimmten Wahrscheinlichkeit vorhergesagt werden. Alternativ kann die zweite Bremsung S2 auch völlig unabhängig von der ersten Bremsung S1 ausgelöst werden.

Eine weitere zwingende Voraussetzung für die zweite Bremsung S2 ist, dass Position und Zustand des Gegner-Fahrzeugs von den bordeigenen Sensoren erfasst werden, also dass erste Daten 11 über das Gegner-Fahrzeug vorliegen. Hierdurch wird sichergestellt, dass die Position, Geschwindigkeit, Richtung und Beschleunigung des Gegner-Fahrzeugs mit hoher Zuverlässigkeit und hoher Sicherheit erfasst werden.

Eine weitere Bedingung ist, dass der letztmögliche Zeitpunkt erreicht wird, zu dem das Durchführen der zweiten Bremsung S2 die Kollision vermeiden kann. Hierbei können auch die oben in Bezug auf die erste Bremsung beschriebenen Strategien angewendet werden. Vorzugsweise soll das Ego-Fahrzeug in einem Bereich vor dem Gegner-Fahrzeug zum Stehen kommen.

Mit dem Bezugszeichen 4 ist in Fig. 2 eine Bremseinrichtung dargestellt. Dies kann beispielsweise eine Komponente sein, die die geforderte Bremskraft auf die Bremsen des Ego-Fahrzeugs überträgt. Hierbei handelt es sich meist um ein Steuergerät eines ESC- oder ESP-Systems ("Electronic Stability Control" bzw. "Elektronisches Stabilitätsprogramm") mit entsprechenden Schnittstellen.

Fig. 3 zeigt einen zeitlichen Ablauf eines Verfahrens zum Durchführen einer Bremsung gemäß einem Ausführungsbeispiel. Die senkrechte Achse gibt eine Verzögerung (negative Beschleunigung) in m/s² an. Die horizontale Achse ist die Zeitachse. Die dicke Linie illustriert den zeitlichen Verlauf der Verzögerung des Ego-Fahrzeugs. Im Folgenden werden die in Fig. 3 markierten Zeitpunkte t1 bis t6 erläutert.

Zum ersten Zeitpunkt t1 befindet sich das Gegner-Fahrzeug in Kommunikationsreichweite für V2X-Kommunikation. Ab diesem ersten Zeitpunkt t1 können periodisch zweite Daten 12 über das Gegner-Fahrzeug mittels V2X empfangen werden. Die Existenzwahrscheinlichkeit des Gegner-Fahrzeugs kann mit jeder empfangenen Nachricht, welche z.B. die zweiten Daten 12 und einen Zeitstempel umfasst, erhöht werden. Das vorliegende Verfahren bzw. das entsprechende System kann dann wie oben beschrieben die Kollisionswahrscheinlichkeit mit dem Gegner-Fahrzeug und die entsprechende verbleibende Zeit zur Kollision berechnen.

Der Zeitpunkt t2 bezeichnet einen spätestmöglichen Auslösepunkt zum Vermeiden einer Kollision mittels erster Bremsung S1. Zum Zeitpunkt t2 sollte die erste Bremsung S1 ausgelöst werden, um eine Kollision zu vermeiden. Allerdings sind noch nicht alle Bedingungen des ersten Satzes von Bedingungen erfüllt. Insbesondere ist die verbleibende Zeit zur Kollision noch größer als ein vorgegebener Maximalwert zum Auslösen der ersten Bremsung S1.

Zum Zeitpunkt t3 erreicht die verbleibende Zeit zur Kollision den höchsten zulässigen Wert zum Auslösen ersten Bremsung S1. Jetzt sind alle erste Bedingungen erfüllt und die erste Bremsung S1 wird ausgelöst. Dabei wird eine erste Bremskraft B1 aufgewendet, um eine Verzögerung von hier ca. 4 m/s² zu bewirken. Mit TS1 wird das Triggersignal für die erste Bremsung S1 bezeichnet.

Zum Zeitpunkt t4 besteht erstmals eine Sichtverbindung zum Gegner-Fahrzeug: Jetzt wird das Gegner-Fahrzeug von den bordeigenen Sensoren des Ego-Fahrzeugs erkannt, so dass erste Daten 11 über das Gegner-Fahrzeug erfasst werden. Noch ist es jedoch nicht notwendig, eine Notbremsung S2 einzuleiten.

Der Zeitpunkt t5 bezeichnet den spätestmöglichen Zeitpunkt zum Auslösen der zweiten Bremsung S2 zum Vermeiden der Kollision. In diesem Moment sind alle zweiten Bedingungen erfüllt und die zweite Bremsung S2 wird durch das zweite Triggersignal TS2 ausgelöst. Hierbei wird die zweite Bremskraft B2 aufgewendet, um eine maximale Verzögerung von 9 m/s² zu bewirken.

Zum Zeitpunkt t6 wird der automatische Bremseingriff deaktiviert. Hierfür kann es zwei Gründen geben: Das Ego-Fahrzeug ist zum Stillstand gekommen und/oder es wird keine Kollision mehr vorhergesagt. Beispielsweise kann das Ego-Fahrzeug hinter dem Gegner-Fahrzeug passieren, das den Weg des Ego-Fahrzeugs vollständig passiert hat.

Es wird davon ausgegangen, dass ein mäßiges Bremsen keine gefährlichen Situationen mit anderen Verkehrsteilnehmern hervorruft. Dennoch sollen unnötige Bremsauslösungen, sogenannte falsch-positive Bremsungen, aus Akzeptanzgründen geringgehalten werden. Die Wahrscheinlichkeit einer falschpositiven Bremsung ist bei hoher verbleibender Zeit zur Kollision noch groß, da Unsicherheiten mit der Zeit zunehmen. Beispielsweise kann sich das Verhalten der Fahrer ändern. Die moderate erste Bremsung S1 muss jedoch früher ausgelöst werden als eine Vollbremsung und kann daher eine höhere Falsch-Positiv-Rate haben. Im Folgenden werden Maßnahmen beschrieben, um falschpositiven Bremsungen zu vermeiden bzw. zu reduzieren.

Das Auslösen der ersten Bremsung S1 kann auf Fälle beschränkt werden, in denen ein Hindernis, das ein direktes Erkennen des Gegner-Fahrzeugs behindert, von den bordeigenen Sensoren direkt erkannt wird. Alternativ kann dadurch, dass über V2X erfasste zweite Daten 12 über das Gegner-Fahrzeug aber keine erste Daten 11 vorhanden sind, darauf geschlossen werden, dass ein Hindernis ein direktes Erkennen des Gegner-Fahrzeugs blockiert. Diese Prüfung kann beispielsweise auch davon abhängig gemacht werden, dass sich das Gegner-Fahrzeug innerhalb der Reichweite der bordeigenen Sensoren befindet.

Das Auslösen der ersten Bremsung S1 kann ferner auf Fälle beschränkt werden, in denen das Ego-Fahrzeug keine Vorfahrt hat. Die erste Bremsung S1 wird in der Regel zu einem späteren Zeitpunkt ausgelöst, als der Fahrer zu bremsen beginnen würde, wenn er die vorliegende Vorfahrtssituation erkennt. Wenn der Fahrer aus irgendeinem Grund nicht bremst, kann das erfindungsgemäße Verfahren einen Unfall verhindern.

Vorzugsweise wird die erste Bremsung S1 jedoch nicht ausgelöst, wenn das Gegner-Fahrzeug die Vorfahrt des Ego-Fahrzeugs verletzt. In dieser Situation ist eine falsch-positive Bremsung wahrscheinlich, wenn das Gegner-Fahrzeug sein Bremsmanöver noch nicht begonnen hat. Das Weglassen dieser Situationen birgt ein großes Potenzial, das Auftreten falsch-positiver Bremsungen insgesamt zu reduzieren. Hierzu benötigt das Verfahren Informationen über geltende Vorfahrtsregeln, die beispielsweise durch Karteninformationen und/oder das Erkennen von Verkehrszeichen und Ampeln gewonnen werden können.

Normalerweise bremsen Fahrer in einem Bereich von bis zu 3 m/s² ab, um Situationen in städtischen Umgebungen zu bewältigen. Die erste Bremsung S1 kann daher so lange verzögert werden, bis es unwahrscheinlich ist, dass das Gegner-Fahrzeug abbremst und/oder ausweicht. Dies kann erreicht werden, wenn die erste Bremsung S1 beispielsweise nur dann ausgelöst werden darf, wenn das Gegner-Fahrzeug mit einer überdurchschnittlichen Verzögerung, z.B. größer als 3 m/s², bremsen müsste, um eine Kollision mit dem Ego-Fahrzeug zu vermeiden. Diese Einschränkung kann falsch-positive Bremsungen verringern. Die gleiche Bedingung kann auch auf Bremsungen durch den Fahrer des Ego-Fahrzeugs angewendet werden.

Das Fehlen der ersten Daten 11 über das Gegner-Fahrzeug kann andere Gründe haben als eine Sichtbehinderung durch ein Hindernis. Beispielsweise kann die Sensorreichweite durch Wettereinflüsse wie Nebel, Schnee oder starken Regen oder durch blendende (tiefstehende) Sonne oder durch Staub, Schmutz oder Schnee auf dem Sensor selbst eingeschränkt sein. Ferner können die Sensoren eine geringe Qualität oder Messgenauigkeit haben. Weitere Gründe umfassen eine Fehlfunktion eines oder mehrerer bordseitiger Sensoren. In diesen Fällen kann die erste Bremsung S1 auf Grundlage der mittels V2X empfangenen zweiten Daten 12 Kollisionen verhindern.

In der vorliegenden Erfindung wurden mehrere Merkmale mit der Bezeichnung "erste/r" und "zweite/r" versehen. Diese Bezeichnungen dienen nur der verständlichen Abgrenzung der einzelnen Merkmale. Insbesondere soll sich daraus keine räumliche oder funktionelle Anordnung oder Priorisierung ableiten.

Wenn in der vorliegenden Anmeldung eine Auflistung von Alternativen mit der Bezeichnung "oder" versehen ist, soll darunter verstanden werden, dass sowohl die aufgelisteten Alternativen jeweils für sich allein genommen aber auch, falls sinnvoll, eine Kombination mehrerer oder aller aufgelisteten Alternativen verstanden werden sollen.

## Patentansprüche

1. Verfahren zum Durchführen einer Bremsung in einem Ego-Fahrzeug (1) mit den Schritten:
Erfassen erster Daten (11) von Sensoren an Bord des Ego-Fahrzeugs (1), die eine Umgebung des Ego-Fahrzeugs (1) detektieren;
Erfassen zweiter Daten (12) mittels Fahrzeug-Kommunikation, V2X, über ein Gegner-Fahrzeug (2), wobei die zweiten Daten (12) eine Position, eine Richtung und eine Geschwindigkeit des Gegner-Fahrzeugs (2) umfassen;
Erfassen dritter Daten (13), die eine Position, eine Richtung und eine Geschwindigkeit des Ego-Fahrzeugs (1) umfassen;
Ermitteln einer Kollisionswahrscheinlichkeit (15) zwischen dem Ego-Fahrzeug (1) und dem Gegner-Fahrzeug (2) in Abhängigkeit der ersten Daten (11), zweiten Daten (12) und dritten Daten (13);
Durchführen einer ersten Bremsung (S1) mit einer ersten Bremskraft (B1), wenn ein erster Satz von Bedingungen erfüllt ist; und **gekennzeichnet durch** das Durchführen einer zweiten Bremsung (S2) mit einer zweiten Bremskraft (B2), wenn ein zweiter Satz von Bedingungen erfüllt ist, wobei:
die zweite Bremskraft (B2) größer als die erste Bremskraft (B1) ist;
der erste Satz von Bedingungen umfasst:
die ersten Daten (11) umfassen keine Informationen über das Gegner-Fahrzeug (2);
die Kollisionswahrscheinlichkeit ist gleich groß wie oder größer als ein erster Grenzwert; und
der zweite Satz von Bedingungen umfasst:
die ersten Daten (11) umfassen eine Position, eine Richtung und eine Geschwindigkeit des Gegner-Fahrzeugs (2);
die Kollisionswahrscheinlichkeit ist gleich groß wie oder größer als ein zweiter Grenzwert.

2. Verfahren (1) nach Anspruch 1, ferner umfassend:
einen Schritt zum Erzeugen eines Umgebungsmodells (14) des Ego-Fahrzeugs (1), das eine Beschreibung der Position, Richtung und Geschwindigkeit des Ego-Fahrzeugs (1) und des Gegner-Fahrzeugs (2) sowie deren jeweiligen Unsicherheiten umfasst, wobei
die Kollisionswahrscheinlichkeit (15) in Abhängigkeit des Umgebungsmodells (14) bestimmt wird.

3. Verfahren (1) nach Anspruch 2, wobei das Umgebungsmodel ferner umfasst:
Informationen über eine Fahrspur des Ego-Fahrzeugs (1) und/oder des Gegner-Fahrzeugs (2); und/oder
Karteninformationen, die eine Topographie einer Umgebung des Ego-Fahrzeugs (1) und/oder des Gegenerfahrzeugs (2) beschreiben; und/oder
Informationen über ein Vorfahrtsrecht des Ego-Fahrzeugs (1) und/oder des Gegner-Fahrzeugs (2).

4. Verfahren (1) nach einem der vorhergehenden Ansprüche, wobei die ersten Daten (11) ferner umfassen:
eine Beschleunigung des Gegner-Fahrzeugs (2); und/oder
eine Gierrate des Gegner-Fahrzeugs (2); und/oder
ein Fahrzeugtyp des Gegner-Fahrzeugs (2); und/oder
Abmessungen des Gegner-Fahrzeugs (2); und/oder
eine vergangene Trajektorie des Gegner-Fahrzeugs (2); und/oder
eine geplante Trajektorie des Gegner-Fahrzeugs (2).

5. Verfahren (1) nach einem der vorhergehenden Ansprüche, wobei die zweiten Daten (12) ferner umfassen:
eine Beschleunigung des Gegner-Fahrzeugs (2); und/oder
eine Bremskraft des Gegner-Fahrzeugs (2); und/oder
einen Lenkwinkel des Gegner-Fahrzeugs (2); und/oder
eine Gierrate des Gegner-Fahrzeugs (2); und/oder
ein Fahrzeugtyp des Gegner-Fahrzeugs (2); und/oder
Abmessungen des Gegner-Fahrzeugs (2); und/oder
eine vergangene Trajektorie des Gegner-Fahrzeugs (2); und/oder eine geplante Trajektorie des Gegner-Fahrzeugs (2).

6. Verfahren (1) nach einem der vorhergehenden Ansprüche, wobei die dritten Daten (13) ferner umfassen:
eine Beschleunigung des Ego-Fahrzeugs; und/oder
eine Bremskraft des Ego-Fahrzeugs; und/oder
einen Lenkwinkel des Ego-Fahrzeugs; und/oder
eine Gierrate des Ego-Fahrzeugs; und/oder
ein Fahrzeugtyp des Ego-Fahrzeugs; und/oder
Abmessungen des Ego-Fahrzeugs; und/oder
eine vergangene Trajektorie des Ego-Fahrzeugs; und/oder
eine geplante Trajektorie des Ego-Fahrzeugs.

7. Verfahren (1) nach einem der vorhergehenden Ansprüche, wobei
die erste Bremskraft (B1) eine Verzögerung des Ego-Fahrzeugs (1) von höchstens 4 ms⁻² bewirkt; und/oder
die zweite Bremskraft (B2) eine maximale Verzögerung des Ego-Fahrzeugs (1) bewirkt.

8. Verfahren (1) nach einem der vorhergehenden Ansprüche, wobei
die erste Bremsung (S1) zu einem Zeitpunkt eingeleitet wird, zu dem ein berechneter verbleibender Zeitraum bis zur Kollision einen Maximalwert unterschreitet. Gleichzeitig soll der Zeitpunkt der Bremseinleitung spätestmöglich erfolgen, sodass ein unnötig frühes Bremsen vermieden wird.

9. Verfahren (1) nach einem der vorhergehenden Ansprüche, wobei der erste Satz von Bedingungen ferner umfasst, dass ein Hindernis erkannt wird, dass ein Erfassen des Gegner-Fahrzeugs (2) mittels der ersten Daten (11) verhindert.

10. Verfahren (1) nach einem der vorhergehenden Ansprüche, ferner umfassend:
Erfassen von Informationen über ein Vorfahrtsrecht des Ego-Fahrzeugs (1) und des Gegner-Fahrzeugs (2), wobei der erste Satz von Bedingungen ferner umfasst:
das Ego-Fahrzeug (1) muss ein Vorfahrtsrecht des Gegner-Fahrzeugs (2) achten.

11. Vorrichtung zum Durchführen einer Bremsung in einem Ego-Fahrzeug, umfassend:
eine erste Einrichtung zum Erfassen erster Daten (11) von Sensoren an Bord des Ego-Fahrzeugs (1), die eingerichtet sind, eine Umgebung des Ego-Fahrzeugs (1) zu detektieren;
eine zweite Einrichtung zum Erfassen zweiter Daten (12) mittels Fahrzeug-Kommunikation, V2X, über ein Gegner-Fahrzeug (2), wobei die zweiten Daten (12) eine Position, eine Richtung und eine Geschwindigkeit des Gegner-Fahrzeugs (2) umfassen;
eine dritte Einrichtung zum Erfassen dritter Daten (13), die eine Position, eine Richtung und eine Geschwindigkeit des Ego-Fahrzeugs (1) umfassen;
eine Steuereinrichtung zum Bestimmen einer Kollisionswahrscheinlichkeit (15) zwischen dem Ego-Fahrzeug (1) und dem Gegner-Fahrzeug (2) in Abhängigkeit der ersten Daten (11),
zweiten Daten (12) und dritten Daten (13), wobei die Steuereinrichtung konfiguriert ist zum:
Durchführen einer ersten Bremsung (S1) mit einer ersten Bremskraft (B1), wenn ein erster Satz von Bedingungen erfüllt ist; und **gekennzeichnet durch** das
Durchführen einer zweiten Bremsung (S2) mit einer zweiten Bremskraft (B2), wenn ein zweiter Satz von Bedingungen erfüllt ist, wobei:
die zweite Bremskraft (B2) größer als die erste Bremskraft (B1) ist;
der erste Satz von Bedingungen umfasst:
die ersten Daten (11) umfassen keine Informationen über das Gegner-Fahrzeug (2);
die Kollisionswahrscheinlichkeit ist gleich groß wie oder größer als ein erster Grenzwert; und
der zweite Satz von Bedingungen umfasst:
die ersten Daten (11) umfassen eine Position, eine Richtung und eine Geschwindigkeit des Gegner-Fahrzeugs (2);
die Kollisionswahrscheinlichkeit ist gleich groß wie oder größer als ein zweiter Grenzwert.

## Claims

1. Method for performing a braking operation in an ego vehicle (1), comprising the steps of:
acquiring first data (11) from sensors aboard the ego vehicle (1) that detect surroundings of the ego vehicle (1);
acquiring second data (12) by means of vehicle communication, V2X, about an oncoming vehicle (2), the second data (12) comprising a position, a direction and a speed of the oncoming vehicle (2);
acquiring third data (13) comprising a position, a direction and a speed of the ego vehicle (1);
determining a probability of collision (15) between the ego vehicle (1) and the oncoming vehicle (2) on the basis of the first data (11), second data (12) and third data (13);
performing a first braking operation (S1) with a first braking force (B1) when a first set of conditions is satisfied; and **characterized by**
performing a second braking operation (S2) with a second braking force (B2) when a second set of conditions is satisfied, wherein:
the second braking force (B2) is greater than the first braking force (B1);
the first set of conditions comprises:
the first data (11) not comprising any information about the oncoming vehicle (2);
the probability of collision being equal to or greater than a first limit value; and
the second set of conditions comprises:
the first data (11) comprising a position, a direction and a speed of the oncoming vehicle (2);
the probability of collision being equal to or greater than a second limit value.

2. Method (1) according to Claim 1, further comprising:
a step for generating a model of the surroundings (14) of the ego vehicle (1) that comprises a description of the position, direction and speed of the ego vehicle (1) and the oncoming vehicle (2) and the respective uncertainties thereof, wherein
the probability of collision (15) is determined on the basis of the model of the surroundings (14).

3. Method (1) according to Claim 2, wherein the model of the surroundings further comprises:
information about a lane of the ego vehicle (1) and/or the oncoming vehicle (2); and/or
map information describing a topography of surroundings of the ego vehicle (1) and/or the oncoming vehicle (2); and/or
information about a right of way of the ego vehicle (1) and/or the oncoming vehicle (2).

4. Method (1) according to one of the preceding claims, wherein the first data (11) further comprise:
an acceleration of the oncoming vehicle (2); and/or
a yaw rate of the oncoming vehicle (2); and/or
a vehicle type of the oncoming vehicle (2); and/or
dimensions of the oncoming vehicle (2); and/or
a past trajectory of the oncoming vehicle (2); and/or
a planned trajectory of the oncoming vehicle (2).

5. Method (1) according to one of the preceding claims, wherein the second data (12) further comprise:
an acceleration of the oncoming vehicle (2); and/or
a braking force of the oncoming vehicle (2); and/or
a steering angle of the oncoming vehicle (2); and/or
a yaw rate of the oncoming vehicle (2); and/or
a vehicle type of the oncoming vehicle (2); and/or
dimensions of the oncoming vehicle (2); and/or
a past trajectory of the oncoming vehicle (2); and/or
a planned trajectory of the oncoming vehicle (2).

6. Method (1) according to one of the preceding claims, wherein the third data (13) further comprise:
an acceleration of the ego vehicle; and/or
a braking force of the ego vehicle; and/or
a steering angle of the ego vehicle; and/or
a yaw rate of the ego vehicle; and/or
a vehicle type of the ego vehicle; and/or
dimensions of the ego vehicle; and/or
a past trajectory of the ego vehicle; and/or
a planned trajectory of the ego vehicle.

7. Method (1) according to one of the preceding claims, wherein
the first braking force (B1) brings about a deceleration of the ego vehicle (1) of at most 4 ms⁻²; and/or
the second braking force (B2) brings about a maximum deceleration of the ego vehicle (1).

8. Method (1) according to one of the preceding claims, wherein
the first braking operation (S1) is initiated at a time at which a calculated remaining period of time until collision is below a maximum value; at the same time the time at which braking is initiated is meant to occur as late as possible so that unnecessarily early braking is avoided.

9. Method (1) according to one of the preceding claims, wherein the first set of conditions further comprises an obstacle that prevents the oncoming vehicle (2) from being detected by means of the first data (11) being identified.

10. Method (1) according to one of the preceding claims, further comprising:
acquiring information about a right of way of the ego vehicle (1) and the oncoming vehicle (2), wherein the first set of conditions further comprises:
the ego vehicle (1) having to respect a right of way of the oncoming vehicle (2).

11. Apparatus for performing a braking operation in an ego vehicle, comprising:
a first device for acquiring first data (11) from sensors aboard the ego vehicle (1) that are set up to detect surroundings of the ego vehicle (1);
a second device for acquiring second data (12) by means of vehicle communication, V2X, about an oncoming vehicle (2), the second data (12) comprising a position, a direction and a speed of the oncoming vehicle (2);
a third device for acquiring third data (13) comprising a position, a direction and a speed of the ego vehicle (1);
a control device for determining a probability of collision (15) between the ego vehicle (1) and the oncoming vehicle (2) on the basis of the first data (11), second data (12) and third data (13), the control device being configured for:
performing a first braking operation (S1) with a first braking force (B1) when a first set of conditions is satisfied; and **characterized by**
performing a second braking operation (S2) with a second braking force (B2) when a second set of conditions is satisfied, wherein:
the second braking force (B2) is greater than the first braking force (B1);
the first set of conditions comprises:
the first data (11) not comprising any information about the oncoming vehicle (2);
the probability of collision being equal to or greater than a first limit value; and
the second set of conditions comprises:
the first data (11) comprising a position, a direction and a speed of the oncoming vehicle (2);
the probability of collision being equal to or greater than a second limit value.

## Revendications

1. Procédé destiné à l'exécution d'un freinage dans un véhicule propre (1) comprenant les étapes suivantes :
l'acquisition de premières données (11) provenant de capteurs embarqués du véhicule propre (1) qui détectent un environnement du véhicule propre (1) ;
l'acquisition de deuxièmes données (12) au moyen d'une communication entre véhicules, V2X, concernant un véhicule tiers (2), les deuxièmes données (12) comprenant une position, une direction et une vitesse du véhicule tiers (2) ;
l'acquisition de troisièmes données (13) comprenant une position, une direction et une vitesse du véhicule propre (1) ;
la détermination d'une probabilité de collision (15) entre le véhicule propre (1) et le véhicule tiers (2) en fonction des premières données (11), des deuxièmes données (12) et des troisièmes données (13) ;
l'exécution d'un premier freinage (S1) avec une première force de freinage (B1) lorsqu'un premier ensemble de conditions est rempli ; et **caractérisé par**
l'exécution d'un deuxième freinage (S2) avec une deuxième force de freinage (B2) lorsqu'un deuxième ensemble de conditions est rempli, dans lequel :
la deuxième force de freinage (B2) est supérieure à la première force de freinage (B1) ;
le premier ensemble de conditions comprend :
les premières données (11) ne comprennent aucune information concernant le véhicule tiers (2) ;
la probabilité de collision est égale ou supérieure à une première valeur limite ; et
le deuxième ensemble de conditions comprend :
les premières données (11) comprennent une position, une direction et une vitesse du véhicule tiers (2) ;
la probabilité de collision est égale ou supérieure à une deuxième valeur limite.

2. Procédé (1) selon la revendication 1, comprenant en outre :
une étape de génération d'un modèle d'environnement (14) du véhicule propre (1), qui comprend une description de la position, de la direction et de la vitesse du véhicule propre (1) et du véhicule tiers (2) ainsi que de leurs incertitudes respectives, dans lequel
la probabilité de collision (15) est déterminée en fonction du modèle d'environnement (14).

3. Procédé (1) selon la revendication 2, dans lequel le modèle d'environnement comprend en outre :
des informations concernant une voie de circulation du véhicule propre (1) et/ou du véhicule tiers (2) ; et/ou
des informations cartographiques décrivant une topographie d'un environnement du véhicule propre (1) et/ou du véhicule tiers (2) ; et/ou
des informations concernant un droit de priorité du véhicule propre (1) et/ou du véhicule tiers (2).

4. Procédé (1) selon l'une des revendications précédentes, dans lequel les premières données (11) comprennent en outre :
une accélération du véhicule tiers (2) ; et/ou
une vitesse de lacet du véhicule tiers (2) ; et/ou
un type de véhicule du véhicule tiers (2) ; et/ou
des dimensions du véhicule tiers (2) ; et/ou
une trajectoire passée du véhicule tiers (2) ; et/ou
une trajectoire planifiée du véhicule tiers (2).

5. Procédé (1) selon l'une des revendications précédentes, dans lequel les deuxièmes données (12) comprennent en outre :
une accélération du véhicule tiers (2) ; et/ou
une force de freinage du véhicule tiers (2) ; et/ou
un angle de braquage du véhicule tiers (2) ; et/ou
une vitesse de lacet du véhicule tiers (2) ; et/ou
un type de véhicule du véhicule tiers (2) ; et/ou
des dimensions du véhicule tiers (2) ; et/ou
une trajectoire passée du véhicule tiers (2) ; et/ou
une trajectoire planifiée du véhicule tiers (2).

6. Procédé (1) selon l'une des revendications précédentes, dans lequel les troisièmes données (13) comprennent en outre :
une accélération du véhicule propre ; et/ou
une force de freinage du véhicule propre ; et/ou
un angle de braquage du véhicule propre ; et/ou
une vitesse de lacet du véhicule propre ; et/ou
un type de véhicule du véhicule propre ; et/ou
des dimensions du véhicule propre ; et/ou
une trajectoire passée du véhicule propre ; et/ou
une trajectoire planifiée du véhicule propre.

7. Procédé (1) selon l'une des revendications précédentes, dans lequel
la première force de freinage (B1) provoque une décélération du véhicule propre (1) d'au plus 4 ms⁻² ; et/ou
la deuxième force de freinage (B2) provoque une décélération maximale du véhicule propre (1).

8. Procédé (1) selon l'une des revendications précédentes, dans lequel
le premier freinage (S1) est déclenché à un moment où un intervalle de temps jusqu'à la collision calculé restant passe en dessous d'une valeur maximale, le moment du déclenchement du freinage devant être simultanément le plus tardif possible, de sorte qu'un freinage trop précoce inutile soit évité.

9. Procédé (1) selon l'une des revendications précédentes, dans lequel le premier ensemble de conditions comprend en outre la détection d'un obstacle, qui empêche une détection du véhicule tiers (2) au moyen des premières données (11).

10. Procédé (1) selon l'une des revendications précédentes, comprenant en outre :
l'acquisition d'informations concernant un droit de priorité du véhicule propre (1) et du véhicule tiers (2), le premier ensemble de conditions comprenant en outre :
le véhicule propre (1) doit respecter le droit de priorité du véhicule tiers (2).

11. Dispositif destiné à l'exécution d'un freinage dans un véhicule propre, comprenant :
un premier dispositif destiné à acquérir des premières données (11) provenant de capteurs embarqués du véhicule propre (1), qui sont conçus pour détecter un environnement du véhicule propre (1) ;
un deuxième dispositif destiné à acquérir des deuxièmes données (12) au moyen d'une communication entre véhicules, V2X, concernant un véhicule tiers (2), les deuxièmes données (12) comprenant une position, une direction et une vitesse du véhicule tiers (2) ;
un troisième dispositif destiné à acquérir des troisièmes données (13) comprenant une position, une direction et une vitesse du véhicule propre (1) ;
un dispositif de commande destiné à déterminer une probabilité de collision (15) entre le véhicule propre (1) et le véhicule tiers (2) en fonction des premières données (11), des deuxièmes données (12) et des troisièmes données (13), le dispositif de commande étant configuré pour :
l'exécution d'un premier freinage (S1) avec une première force de freinage (B1) lorsqu'un premier ensemble de conditions est rempli ; et **caractérisé par**
l'exécution d'un deuxième freinage (S2) avec une deuxième force de freinage (B2) lorsqu'un deuxième ensemble de conditions est rempli, dans lequel :
la deuxième force de freinage (B2) est supérieure à la première force de freinage (B1) ;
le premier ensemble de conditions comprend :
les premières données (11) ne comprennent aucune information concernant le véhicule tiers (2) ;
la probabilité de collision est égale ou supérieure à une première valeur limite ; et
le deuxième ensemble de conditions comprend :
les premières données (11) comprennent une position, une direction et une vitesse du véhicule tiers (2) ;
la probabilité de collision est égale ou supérieure à une deuxième valeur limite.
